# EUROPEAN PATENT SPECIFICATION

(11) **EP 3 598 400 B1**
(45) Date of publication and mention of the grant of the patent: **07.06.2023**
(21) Application number: 18766969.2
(22) Date of filing: 08.03.2018
(51) Int. Cl.: G07D 7/00, B65H 7/02, G07D 7/12, G07D 7/164, H04N 1/04

(54) **PAPER SHEET IMAGE ACQUISITION DEVICE, PAPER SHEET PROCESSING DEVICE, AND PAPER SHEET IMAGE ACQUISITION METHOD**
PAPIERBOGENBILDERFASSUNGSVORRICHTUNG, PAPIERBOGENVERARBEITUNGSVORRICHTUNG UND PAPIERBOGENBILDAUFNAHMEVERFAHREN
DISPOSITIF D'ACQUISITION D'IMAGE DE FEUILLE DE PAPIER, DISPOSITIF DE TRAITEMENT DE FEUILLE DE PAPIER ET PROCÉDÉ D'ACQUISITION D'IMAGE DE FEUILLE DE PAPIER

(30) Priority: 13.03.2017 JP 2017047479
(43) Date of publication of application: 22.01.2020
(73) Proprietor: Glory Ltd., Hyogo 670-8567 (JP)
(72) Inventor: KASUYA, Tomohiko, Himeji-shi Hyogo 670-8567 (JP); NAKASHIMA, Akira, Himeji-shi Hyogo 670-8567 (JP); AMOU, Toshiyuki, Himeji-shi Hyogo 670-8567 (JP); MATSUMOTO, Eiji, Himeji-shi Hyogo 670-8567 (JP)
(74) Representative: SSM Sandmair
(86) International application number: PCT/JP2018/008992
(87) International publication number: WO 2018/168645

(56) References cited:
- EP-A1- 3 373 256
- WO-A1-2016/088279
- WO-A1-2016/088279
- JP-A- 2003 288 628
- JP-A- 2015 138 437
- US-A1- 2003 141 653

## Description

### TECHNICAL FIELD

The present invention relates to sheet image acquisition devices, sheet handling devices, and sheet image acquisition methods. The present invention specifically relates to a sheet image acquisition device, a sheet handling device, and a sheet image acquisition method suitable for extracting the shape of a sheet from an image of the sheet and the background thereof.

### BACKGROUND ART

Sheets such as banknotes (printed money), gift vouchers, and checks have a variety of security characteristics for anti-counterfeiting. For example, although paper made of vegetable fibers is usually used for sheets, paper made of synthetic fibers or a polymer sheet made of synthetic resin may be used in order to improve the properties such as durability, water resistance, and security. Banknotes made of polymer sheets are called polymer banknotes. Polymer banknotes having a transparent portion such as a clear window (transparent window) are difficult to counterfeit.

For collection of information of a sheet, an optical sensor such as an optical line sensor is usually used. A transparent portion transmits light emitted from the optical sensor, and a sheet having a transparent portion may therefore need to undergo different processes from a common sheet having no transparent portion.

For example, Patent Literature 1 discloses a sheet handling machine as a technique to prevent false detection of abnormal transport due to an island-shaped window formed in a banknote. The sheet handling machine stops operation of identifying the passage of the rear edge portion at a position corresponding to one transport path sensor during a preset period from a time point when the absence of a banknote is detected if the absence of the banknote is detected after judgement of passage of the banknote at the position corresponding to the one transport path sensor among a plurality of transport path sensors disposed along a transport path.

Document US2003/141653 A1 discloses an image acquisition device according to the preamble of claim 1.

### CITATION LIST

### - Patent Literature

Patent Literature 1: WO 2009/075015

### SUMMARY OF INVENTION

### - Technical Problem

For recognition of information such as the type and the authenticity of a sheet with the use of an image of the sheet, the image is usually taken by an optical line sensor. The light, such as infrared light, emitted from a light source of the optical line sensor passes through a transparent portion of a sheet. Thus, also in this case, a sheet having a transparent portion needs to undergo different processes from a common sheet having no transparent portion.

Specifically, in processing of recognizing a sheet, the shape (external shape, outline) of a sheet is first extracted from the image data acquired by an optical line sensor. In other words, although the image taken by the optical line sensor includes not only the sheet but also the background thereof, a region corresponding to the sheet in the overall image needs to be specified and the shape of the region needs to be extracted. Still, in the case of a sheet having a transparent portion, a region corresponding to the sheet may not be correctly extracted from the overall image.

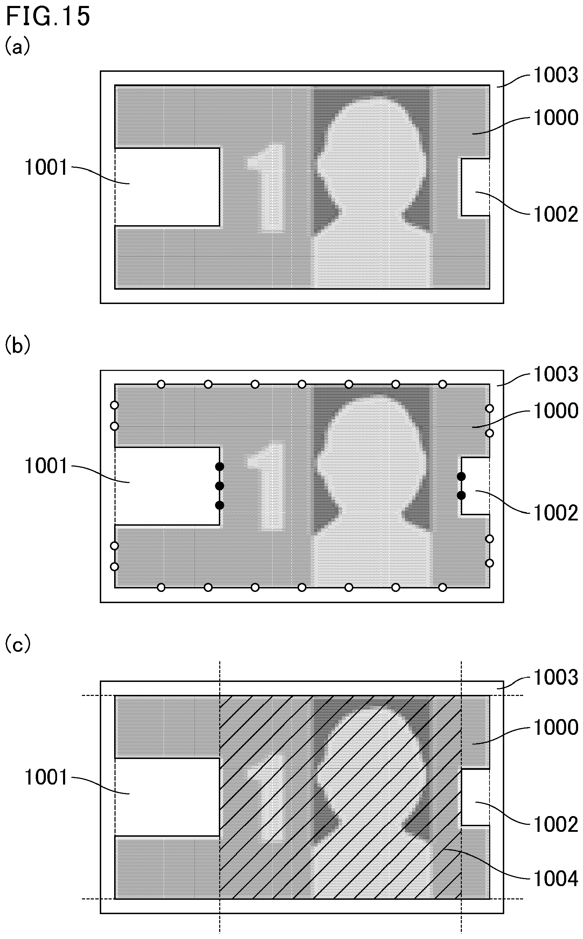

For example, when a transmission image of a banknote having transparent portions is taken using infrared light, the infrared light may pass through the transparent portions. This may cause assimilation of transparent regions 1001 and 1002, which correspond to the transparent portions, in a medium region 1000, which corresponds to the banknote, into a background region 1003, as illustrated in Fig. 15(a). Then, as illustrated in Fig. 15(b), when the transmission image is processed such that multiple points (corresponding to collecting positions of the image data) on the edges of the medium region 1000 are detected as edge computed points (white dots and black dots in Fig. 15(b)) corresponding to the edges of the banknote, these edge computed points may include some edge computed points (the black dots in Fig. 15(b)) inside the actual edges of the banknote. Based on these inappropriate edge computed points, a region 1004 within the medium region 1000 may be computed as the banknote, as illustrated in Fig. 15(c).

To solve this issue, improving the algorithm of sheet shape extraction processing may be considered. Still, such improvement may possibly fail to treat a sheet having an unknown transparent portion.

When the shape of a sheet is not correctly extracted, the sheet size such as the length (e.g., the length of a banknote) and the parameters relating to the state of a sheet under transport such as the skewing angle may not be correctly computed. This may possibly cause a reduction in passage of sheets due to rejection and cause miscalculation due to misrecognition.

In response to the above issues, an object of the present invention is to provide a sheet image acquisition device according to claim 1, and a sheet image acquisition method according to claim 11, capable of improving the precision of extracting the shape of a sheet having a transparent portion.

### - Solution to Problem

One aspect of the present invention is a sheet image acquisition device for acquiring an image of a sheet, comprising a thickness detection sensor configured to collect thickness data of the sheet, and an optical line sensor configured to collect image data of the entire surface of the sheet according to claim 1.

In the above aspect of the present invention, the thickness detection sensor is configured to collect the thickness data at collecting positions in each of the main scanning direction and the sub-scanning direction, the optical line sensor is configured to collect the image data at collecting positions in each of the main scanning direction and the sub-scanning direction, the sheet image acquisition device further comprises: a transporter configured to transport the sheet; a first edge detector configured to detect the position of an edge of the sheet from the thickness data; a second edge detector configured to detect collecting positions corresponding to an edge of the sheet from the image data, with the collecting positions being determined as edge computed points; and a computed point corrector configured to remove an edge computed point that does not correspond to the position of the edge detected by the first edge detector from the edge computed points.

In the above aspect of the present invention, the resolution in the main scanning direction of the thickness data is lower than the resolution in the main scanning direction of the image data.

In the above aspect of the present invention, the resolution in the sub-scanning direction of the thickness data is equal to the resolution in the sub-scanning direction of the image data or is higher than the resolution in the sub-scanning direction of the image data.

In the above aspect of the present invention, the thickness detection sensor is placed upstream of the optical line sensor in the transport direction of the sheet.

In the above aspect of the present invention, the thickness detection sensor is placed downstream of the optical line sensor in the transport direction of the sheet.

In the above aspect of the present invention, the thickness detection sensor is configured to collect thickness data of the entire surface of the sheet as the thickness data.

Another aspect of the present invention is a sheet handling device comprising the sheet image acquisition device.

Still another aspect of the present invention is a sheet image acquisition method of acquiring an image of a sheet, the method comprising correcting outline information of the sheet derived from image data of the entire surface of the sheet collected by an optical line sensor based on outline information of the sheet derived from thickness data of the sheet collected by a thickness detection sensor.

### - Advantageous Effects of Invention

The sheet image acquisition device, the sheet handling device, and the sheet image acquisition method of the present invention can improve the precision of extracting the shape of a sheet having a transparent portion.

### BRIEF DESCRIPTION OF THE DRAWINGS

Fig. 1 is a schematic general view of a structure of a banknote handling device of Embodiment 1.
Fig. 2 is a block diagram of a structure relating to control of the banknote handling device of Embodiment 1.
Fig. 3 is a front view of a structure of a mechanical banknote detection sensor of Embodiment 1.
Fig. 4 is a side view of the structure of the mechanical banknote detection sensors of Embodiment 1.
Fig. 5 is a schematic side view of a structure of a banknote recognition device of Embodiment 1.
Fig. 6 includes schematic plan views of the structure of the banknote recognition device of Embodiment 1; the upper figure is a view of an upper unit of the banknote recognition device seen from below and the lower figure is a view of a lower unit of the banknote recognition device seen from above.
Fig. 7 is a block diagram of a structure relating to control of the banknote recognition device of Embodiment 1.
Fig. 8 includes schematic views of images of the left edge of a banknote taken by a thickness detection sensor and an optical line sensor of the banknote image acquisition device of Embodiment 1; the upper figure is a thickness detection sensor image taken by the thickness detection sensor and the lower figure is an optical image taken by the optical line sensor.
Fig. 9 includes schematic views of images of the front edge of a banknote taken by the thickness detection sensor and the optical line sensor of the banknote image acquisition device of Embodiment 1; the upper figure is a thickness detection sensor image taken by the thickness detection sensor and the lower figure is an optical image taken by the optical line sensor.
Fig. 10 includes schematic views of images of the front edge of a banknote taken by the thickness detection sensor and the optical line sensor of the banknote image acquisition device of Embodiment 1; the upper figure is a thickness detection sensor image (with a high resolution in the sub-scanning direction) taken by the thickness detection sensor and the lower figure is an optical image taken by the optical line sensor.
Fig. 11 includes schematic views of images of the front edge of a banknote taken by a thickness detection sensor and an optical line sensor of a banknote image acquisition device of Modified Embodiment; the upper figure is a thickness detection sensor image (with a high resolution in the main scanning direction) taken by the thickness detection sensor and the lower figure is an optical image taken by the optical line sensor.
Fig. 12 includes schematic views of images of the front edge of a banknote taken by the thickness detection sensor and the optical line sensor of the banknote image acquisition device of Modified Embodiment; the upper figure is a thickness detection sensor image (with high resolutions in the main scanning direction and the sub-scanning direction) taken by the thickness detection sensor and the lower figure is an optical image taken by the optical line sensor.
Fig. 13 includes schematic views of images of a tape-attached part of a banknote taken by the thickness detection sensor and the optical line sensor of the banknote image acquisition device of Modified Embodiment; the upper figure is an optical image taken by the optical line sensor and the lower figure is a thickness detection sensor image taken by the thickness detection sensor.
Fig. 14 is a schematic plan view of an exemplary banknote having a transparent portion.
Figs. 15(a) to 15(c) are schematic plan views of transmission images of a banknote taken by an optical line sensor.

### DESCRIPTION OF EMBODIMENTS

Preferred embodiments of the sheet image acquisition device, the sheet handling device, and the sheet image acquisition method of the present invention are described below with reference to the drawings. Examples of the sheet to be detected in the present invention include banknotes, checks, gift vouchers, bills, ledgers, documents of value, and card-like media. In the following, the present invention is described with a banknote image acquisition device, a banknote recognition device, a banknote handling device, and a banknote image acquisition method taken as examples. Described in the following are examples of a banknote image acquisition device, a banknote recognition device, a banknote handling device, and a banknote image acquisition method.

A banknote to be handled in the present embodiment is described here. The banknote to be handled is preferably a polymer banknote having a transparent portion such as a clear window that transmits light such as infrared light applied. In the present embodiment, a banknote having no transparent portion, such as a paper banknote, may also be handled. The transparent portion is preferably made from a synthetic resin. Thus, the banknote to be handled is preferably formed from a polymer sheet. The banknote to be handled may also be a sheet (hybrid sheet) whose transparent portion is formed from a polymer sheet and whose opaque portion is formed from paper made of vegetable fibers or synthetic fibers. The transparent portion may partially include an optically variable device such as rainbow hologram.

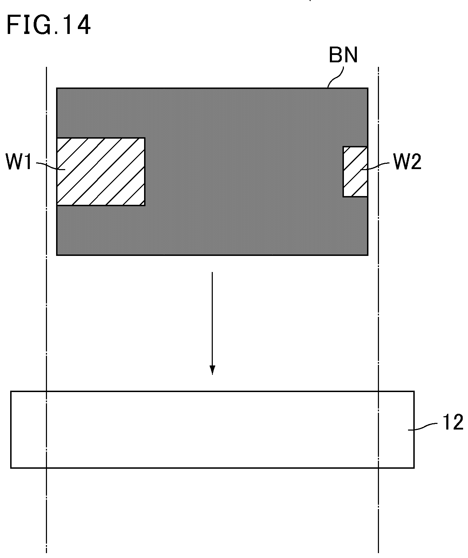

Fig. 14 illustrates a banknote BN1 that is an exemplary banknote to be handled. The banknote BN1 has transparent portions W1 and W2 on the edges in the longitudinal direction. For example, the five pound banknote issued by the Clydesdale Bank in Scotland is similar to this banknote BN1. In the present embodiment, the devices and the method are configured to collect the image data of a banknote BN1 by an optical line sensor 12 arranged in the direction perpendicular to the transport direction (the direction from the head to the bottom of the paper in Fig. 14). When a banknote BN1 passes the optical line sensor 12, the optical line sensor 12 fails to detect the transparent portions W1 and W2 correctly. Thus, in the present embodiment, the devices and the method may fail to correctly extract the positions of the edges of the banknote BN1 in an image taken by the optical line sensor 12 and may fail to correctly extract the shape (external shape, outline) of the banknote BN1 in the image.

In the example illustrated in Fig. 14, the banknote is long-edge fed. Also in the case of short edge feed, the devices and the method may fail to correctly extract the shape of a banknote having a transparent portion.

The banknote image acquisition device, the banknote recognition device, the banknote handling device, and the banknote image acquisition method of the present embodiment described hereinbelow are configured to highly precisely extract the shapes of a variety of banknotes having a transparent portion.

### (Overall structure of banknote handling device)

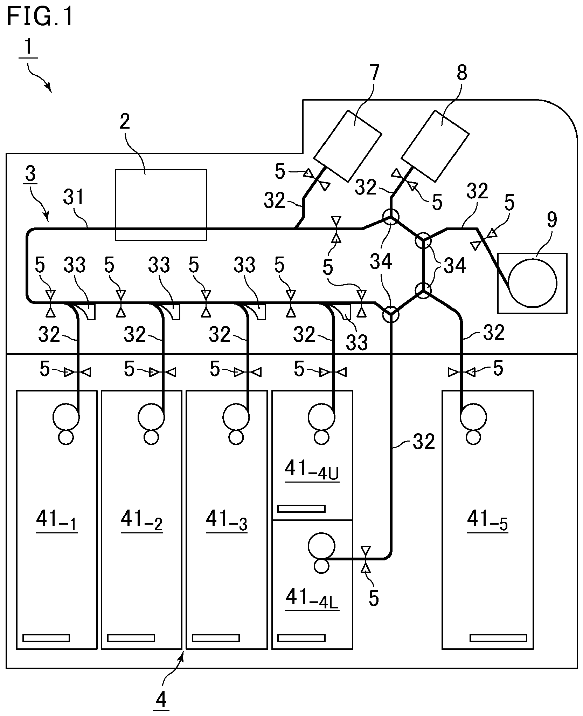

As illustrated in Fig. 1, a banknote handling device 1 of the present embodiment is a device used for depositing and withdrawing banknotes in branches of financial institutions such as banks. In the example illustrated in Fig. 1, the banknote handling device 1 is a banknote depositing and dispensing machine for depositing and withdrawing banknotes. The banknote handling device 1 is not limited to a banknote depositing and dispensing machine. The banknote handling device 1 may be any device including a transport path for transporting banknotes, such as a banknote depositing machine, a banknote dispensing machine, or a banknote sorting machine.

The banknote handling device 1 includes a depositor 7, a withdrawer 8, a banknote recognition device 2, a temporary storage 9, a transporter 3 including a transport path 31, and a storage 4 that stores banknotes.

The depositor 7 includes an inlet for banknotes, although the specification thereof is not illustrated. The inlet is open at the upper surface of the banknote handling device 1. For example, in deposit processing, banknotes are put into the inlet. The inlet holds a plurality of banknotes at the same time.

The withdrawer 8 includes an outlet that is open at the upper surface of the banknote handling device 1. For example, in withdrawal processing, banknotes are dispensed to the outlet. The outlet holds a plurality of banknotes at the same time.

The banknote recognition device 2 is arranged on the transport path 31 for banknotes. The banknote recognition device 2 is configured to recognize at least the denomination and the authenticity of each banknote under transport on the transport path 31. The banknote recognition device 2 may be configured to recognize the fitness of each banknote. The structure of the banknote recognition device 2 is described later.

The temporary storage 9 is a storage that temporarily stores a rejected banknote during withdrawal processing, for example. The temporary storage 9 is also a storage that temporarily stores a banknote fed during deposit processing, for example. In the illustrated example, the temporary storage 9 is a storage that reels up a banknote between tapes.

In the structural example illustrated in Fig. 1, the storage 4 includes five, first to fifth storage cassettes 41₋₁ to 41₋₅. In the following, when the first to fifth storage cassettes are mentioned collectively, they are accompanied with the reference sign "41", and when the first, second, third, fourth, and fifth storage cassettes are mentioned distinctively, they are respectively accompanied with the reference signs "41₋₁, 41₋₂, 41₋₃, 41₋₄, and 41₋₅". The first to fifth storage cassettes 41₋₁ to 41₋₅ are removably attached to the banknote handling device 1.

The storage cassettes 41 each store banknotes in a stacked manner with the faces of banknotes facing upward and downward. The storage cassettes 41 each include a passing port at the upper surface thereof through which banknotes pass. The storage cassettes 41 are each configured to store banknotes fed thereinto through the passing port and to dispense the stored banknotes to the outside through the passing port.

As illustrated in Fig. 1, the inside of the fourth storage cassette 41₋₄ is divided into two, upper and lower parts. The upper space of the fourth storage cassette 41₋₄ (the fourth storage cassette upper part 41_{-4U}) communicates with the outside through the passing port on the upper surface of a housing. The lower space of the fourth storage cassette 41₋₄ (the fourth storage cassette lower part 41_{-4L}) communicates with the outside through a passing port on a side surface of the housing.

The transporter 3 includes the transport path 31 in a looped manner. The depositor 7, the withdrawer 8, the temporary storage 9, and the storage cassettes 41 are connected to the transport path 31 via connection paths 32. The connection points between the transport path 31 and the respective connection paths 32 are each provided with a diverter 33 or 34 that switches the transport destination of a banknote.

On the transport path 31 and the connection paths 32 are provided tracking sensors (timing sensors) 5 that detect passing (transport position) of a banknote on the transport path 31 and the connection paths 32. In the example illustrated in Fig. 1, the tracking sensors 5 are provided on the following positions. Specifically, they are provided near the depositor 7, near the withdrawer 8, near the temporary storage 9, near the storage cassettes 41, and near the diverters 33 and 34 (i.e., on the upstream sides of the transport direction of banknotes). The tracking sensors 5 may be provided on positions other than the positions illustrated in Fig. 1. In order to track a banknote on the transport path 31, the tracking sensors 5 are preferably arranged at intervals shorter than the length of the banknote. The tracking sensors 5 are not necessarily provided on the positions illustrated in Fig. 1. The structure of the tracking sensors 5 are described later.

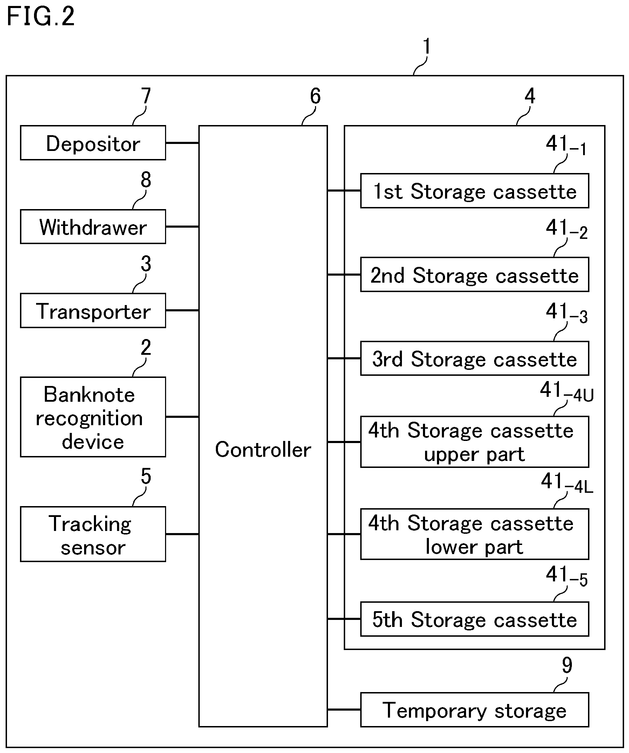

As illustrated in Fig. 2, the banknote handling device 1 includes a controller 6 based on a well-known microcomputer, for example. The controller 6 is coupled with the aforementioned depositor 7, withdrawer 8, temporary storage 9, banknote recognition device 2, transporter 3 including the diverters 33 and 34, and storage 4 including the first to fifth storage cassettes 41₋₁ to 41_s such that they can transmit and receive signals. The controller 6 is also coupled with the tracking sensors 5. The tracking sensors 5 each output a detection signal to the controller 6 when detecting passing of a banknote. The controller 6 controls the transporter 3 including the diverters 33 and 34 based on the signals from the banknote recognition device 2, the units 3, 4, and 7 to 9, and the tracking sensors 5 so that a banknote is transported to the designated transport destination.

The banknote handling device 1 configured as described above operates as follows in deposit processing. Specifically, banknotes to be deposited are fed into the inlet. The depositor 7 sends banknotes in the inlet one by one. The transporter 3 transports the banknotes to the banknote recognition device 2. The banknote recognition device 2 recognizes the information such as the denomination and the authenticity of the banknotes. The transporter 3 sends the banknotes to the temporary storage 9. The temporary storage 9 temporarily stores the deposited banknotes. The transporter 3 also transports the banknotes from the temporary storage 9 to the respective designated storage cassettes 41 based on the recognition results. The transporter 3 may transport some banknotes to the withdrawer 8. As all banknotes in the inlet are sent, the deposit processing is completed.

The banknote handling device 1 configured as described above operates as follows in withdrawal processing. Specifically, the banknotes to be dispensed to the outlet are sent from a predetermined storage cassette 41. The transporter 3 transports the banknotes to the banknote recognition device 2. The banknote recognition device 2 recognizes the banknotes. The transporter 3 dispenses fit notes to the outlet. The transporter 3 also sends reject notes to the temporary storage 9. The temporary storage 9 stores the reject notes. As the designated amount of money of banknotes is dispensed to the outlet, the withdrawal processing is completed. The transporter 3 also transports the rejected notes stored in the temporary storage 9 to a predetermined storage cassette 41.

### (Structure of tracking sensors)

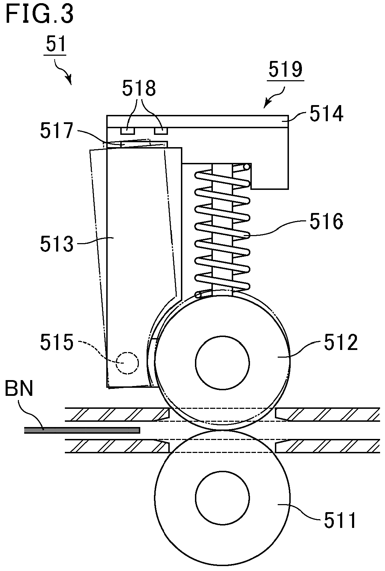

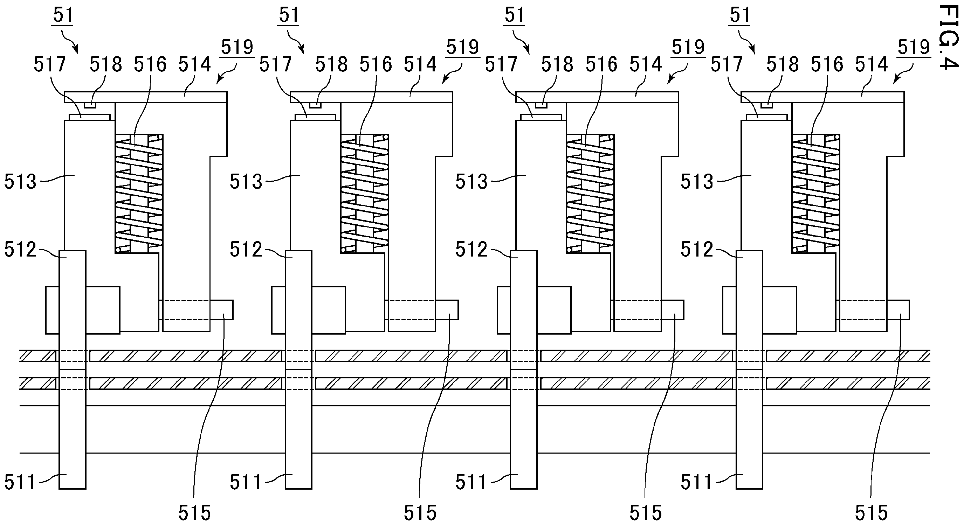

Fig. 3 and Fig. 4 illustrate the structure of a mechanical banknote detection sensor 51 that is one of the tracking sensors 5. The mechanical banknote detection sensor 51 is arranged at each of the aforementioned positions on the transport path 31 and the connection paths 32 instead of a common optical banknote detection sensor.

The mechanical banknote detection sensor 51 includes a pair of rollers 511 and 512 facing each other. A banknote BN passes through the rollers 511 and 512. The pair of rollers 511 and 512 consists of a driving roller 511 and a driven roller 512. The mechanical banknote detection sensor 51 also functions as a pinch roller unit for transporting a banknote BN on the transport path 31 and the connection paths 32. As illustrated in Fig. 4, a plurality of the mechanical banknote detection sensors 51 each functioning as a pinch roller unit is provided on each providing position on the transport path 31 and the connection paths 32 in the direction perpendicular to the transport direction of banknotes BN. Unlike the example illustrated in Fig. 4, at least one pinch roller unit among the pinch roller units arranged in line in the direction perpendicular to the transport direction of banknotes BN may be provided with a detector 519 to be described later to constitute the mechanical banknote detection sensor 51.

The driven roller 512 is rotatably supported on a roller supporter 513. The roller supporter 513 is supported pivotally around a pivot shaft 515 relative to a sensor body 514. In the example illustrated in Fig. 3 and Fig. 4, the pivot shaft 515 is parallel to the rotating shaft of the driven roller 512 and is perpendicular to the transport direction of banknotes BN.

Between the roller supporter 513 and the sensor body 514 is provided a compression spring 516. The compression spring 516 biases the roller supporter 513 in a direction of pushing the driven roller 512 to the driving roller 511 and allows the roller supporter 513 to pivot in the direction of separating the driven roller 512 from the driving roller 511.

The roller supporter 513 is provided with a magnet 517 on an upper end thereof. As described later, when a banknote BN passes between the rollers 511 and 512, the driven roller 512 displaces in a direction of separating from the driving roller 511 while the roller supporter 513 pivots in response to the thickness of the banknote BN. Thereby, the magnet 517 attached to the upper end of the roller supporter 513 is shifted in substantially the horizontal direction (see the two-dot chain line in Fig. 3).

The sensor body 514 is provided with two Hall effect devices 518 to face the magnet 517 attached to the upper end of the roller supporter 513. The Hall effect devices 518 are configured to detect a magnetic field generated by the magnet 517. As described above, when the magnet 517 moves in the horizontal direction, the Hall effect devices output a voltage in accordance with the magnetic field changed in response to this motion. The output voltage is compared with a reference voltage that corresponds to the threshold for determining detection/non-detection of a banknote BN by a comparator mounted on the sensor body 514, and is then output as a detection signal that indicates the detection/non-detection of the banknote BN. Thereby, the mechanical banknote detection sensor 51 detects passing of the banknote BN in response to the displacement of the driven roller 512 and outputs a detection signal to the controller 6. The magnet 517 attached to the roller supporter 513 and the Hall effect devices 518 attached to the sensor body 514 constitute a detector 519 that detects a banknote BN.

As described above, the mechanical banknote detection sensor 51 detects passing of a banknote BN in response to the displacement of the driven roller 512. In other words, the mechanical banknote detection sensor 51 is equivalent to detection of the thickness of a banknote BN. This enables secure and correct detection of passing of a banknote BN1 having transparent portions W1 and W2 as illustrated in Fig. 14. The controller 6 controls the diverters 33 and 34 based on a detection signal from the mechanical banknote detection sensor 51, and thereby enables correct transport of a banknote BN to a desired transport destination.

As described above, the mechanical banknote detection sensor 51 detects the thickness of a banknote BN. In this sense, the mechanical banknote detection sensor 51 is similar to a later described thickness detection sensor that detects the thickness of a banknote BN to detect any abnormal transport such as double feeding, chained feeding, and folding and banknotes BN with material such as tape attached thereto. Still, the mechanical banknote detection sensor 51 detects only passing of a banknote BN, and thus the precision of thickness detection is relatively low. The thickness of one banknote 1 is about 100 µm, so that the detection precision of the mechanical banknote detection sensor 51 is equivalent thereto. In contrast, the thickness detection sensor to be described later detects the thickness of material such as tape attached to a banknote BN, so that it needs a detection precision of at least about 10 µm. They are also different in that the mechanical banknote detection sensor 51 detects the thickness of one or less banknote BN, while the thickness detection sensor detects the thickness of one or more banknotes BN.

The mechanical banknote detection sensor 51 has a lower detection precision than the thickness detection sensor, and thus has a more simple structure and is more compact. Accordingly, the mechanical banknote detection sensor 51 can be structured inexpensively, although it is no match for a common optical banknote detection sensor. As described above, a large number of the tracking sensors 5 are arranged on the transport path 31 and the connection paths 32 of the banknote handling device 1. Every tracking sensor 5 may be the mechanical banknote detection sensor 51.

The structure of the mechanical banknote detection sensor is not limited to the example illustrated in Figs. 3 and Fig. 4. For example, a detector may be assembled into a pinch roller unit of any of various known structures to constitute the mechanical banknote detection sensor.

The method of detecting the displacement of the driven roller 512 may be any method capable of measuring the displacement and is not limited to the method using the magnet 517 and the Hall effect devices 518. For example, a magneto resistive sensor, a combination of a light source and a photo receiver, or a proximity sensor may be used. A banknote BN can be detected by comparing an output that is an electric signal such as resistance, voltage, or current from these sensors with the threshold.

The processing of converting the output from a sensor into a detection signal may be executed not by the sensor body but by another processor. For example, a comparator of the banknote recognition device 2 may compare the output with a reference value that corresponds to the threshold or compare the analog-to-digital converted output with the threshold to convert the output into a detection signal.

### (Structures of banknote recognition device and banknote image acquisition device)

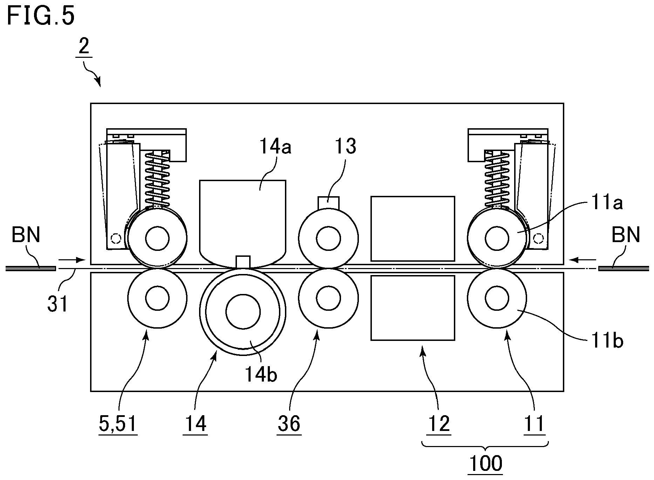

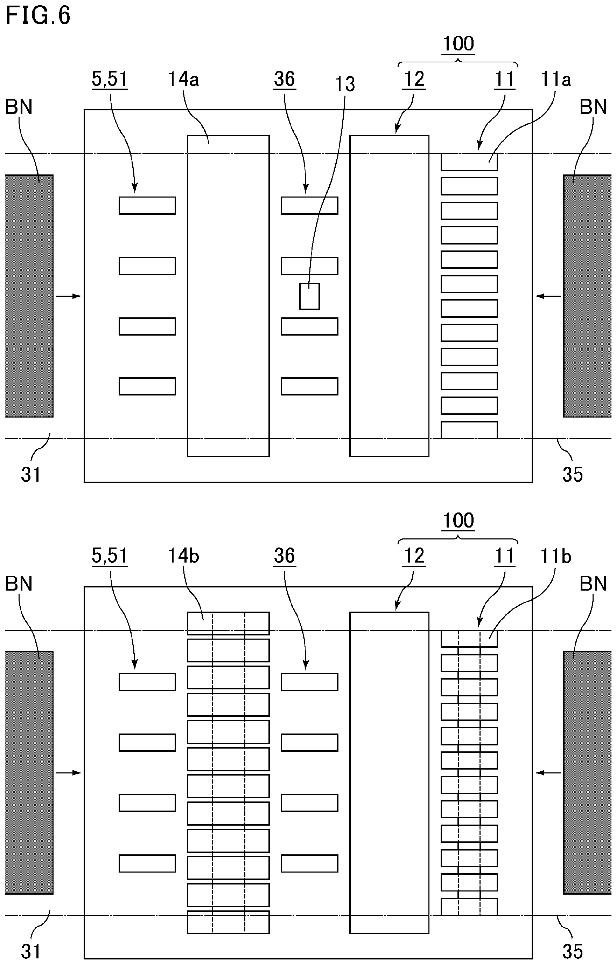

As illustrated in Fig. 5 and Fig. 6, the banknote recognition device 2 includes an upper unit and a lower unit across the transport path 31 for banknotes BN. The upper figure of Fig. 6 corresponds to a plan view of the upper unit of the banknote recognition device 2 seen from below and the lower figure of Fig. 6 corresponds to a plan view of the lower unit of the banknote recognition device 2 seen from above. The banknote recognition device 2 includes the thickness detection sensor 11 that detects (measures) the thickness of a banknote BN to acquire the thickness data of the banknote BN, the optical line sensor 12 that images a banknote BN to acquire the image data of the banknote BN, a fluorescent sensor 13 that acquires the fluorescent properties of a banknote BN, and a magnetic line sensor 14 that acquires the magnetic information of a banknote BN. The banknote recognition device 2 includes the banknote image acquisition device 100 of the present embodiment that includes the thickness detection sensor 11 and the optical line sensor 12.

The optical line sensor 12 includes upper and lower linear light sources capable of applying visible light and infrared light and upper and lower CCD or CMOS one-dimensional image sensors (linear image sensors), and has a function of acquiring an image of a banknote BN, specifically a visible light image and an infrared light image. The optical line sensor 12 is configured to acquire a reflection image (image generated by light reflected on a banknote BN) of the upper surface of a banknote BN, a reflection image of the lower surface of the banknote BN, and a transmission image (image generated by light passing through the banknote BN) of the banknote BN.

Each one-dimensional image sensor includes a plurality of pixels arranged in line in the direction perpendicular to the transport direction of banknotes BN, i.e., in the main scanning direction. The optical line sensor 12 repeats imaging of a banknote BN under transport in the transport direction, i.e., the sub-scanning direction at certain time intervals, with one imaging (exposure of pixel to light) taken as one line, to acquire the image data of the whole banknote BN. Thereby, the optical line sensor 12 collects the image data of a banknote BN at multiple collecting positions in each of the main scanning direction and the sub-scanning direction to collect the image data of the entire surface of the banknote BN.

The fluorescent sensor 13 has a function of applying ultraviolet light to a banknote BN and measuring the reflective light to acquire the fluorescent properties of the banknote BN.

The magnetic line sensor 14 includes a magnetic line sensor unit (magnetic head) 14a that includes magnetic sensor elements arranged in line in the direction (main scanning direction) perpendicular to the transport direction of banknotes BN and hair rollers 14b that face the magnetic line sensor unit 14a and push a banknote BN to the magnetic line sensor unit 14a. The magnetic line sensor 14 measures the magnetic properties (magnetic image) of a banknote BN at certain time intervals, with one measurement taken as one line. The hair rollers 14b are rollers with hairs flocked on the surface. They are used to relieve an impact on the magnetic line sensor unit 14a and weaken a hit of a banknote BN to the sensor owing to the hairs because when a banknote BN strongly hits the magnetic line sensor unit 14a, the output signal includes noises.

As illustrated in Fig. 5 and Fig. 6, the thickness detection sensor 11 includes a roller pair through which a banknote BN passes, and detects the thickness of a banknote BN based on the displacement of the rollers. The thickness detection sensor 11 has substantially the same structure as the mechanical banknote detection sensor 51. Still, the driving roller thereof is a metal rod that has high rigidity, and has a high detection precision. The thickness detection sensor 11 detects any abnormal transport of banknotes BN such as double feeding, chained feeding, and folding and banknotes BN with material such as tape attached thereto.

The thickness detection sensor 11 includes driven rollers 11a on the upper side and driving roller 11b on the lower side, the driven rollers 11a being supported movably in the thickness direction (up-down direction) of a banknote BN relative to the driving rollers 11b supported pivotably around a pivot shaft. The thickness detection sensor 11 measures the upward displacements of the driven rollers 11a on the upper side conforming to the thickness of a banknote BN under transport between the rollers 11a and 11b, thereby measuring the thickness of the banknote BN.

The driven rollers 11a are arranged in the direction (main scanning direction) perpendicular to the transport direction of banknotes BN. The driven rollers 11a of multiple channels, with each channel being constituted by one or more driven rollers 11a, are used to measure the thickness of a banknote BN. For example, 12 channels, with each channel being constituted by a pair of driven rollers 11a, i.e., 24 driven rollers 11a may be used to measure the thickness of a banknote BN. The driven rollers 11a are supported movably in the up-down direction individually for each channel. A banknote BN is divided into regions corresponding to the channels, and the thickness thereof is measured in each region. The thickness detection sensor 11 also measures the thickness of a banknote BN transported at a certain speed on the transport path 31 at certain time intervals, with one measurement taken as one line. Thereby, the thickness detection sensor 11 collects the thickness data of a banknote BN at multiple collecting positions in each of the main scanning direction and the sub-scanning direction to collect the thickness data of the entire surface of the banknote BN. Measurement of the thickness of a banknote using driven rollers 11a of multi-channels is disclosed in JP 4819162 B of the present applicant, and thus the specification thereof is not described herein.

The timing of data acquisition by each sensor may be controlled by a reference pulse that is an output pulse from a rotary encoder that is linked together with a driving motor for the transport path 31 on which a banknote BN is transported at a constant speed or a timer circuit, for example. When a banknote BN is transported at a constant speed, the real time may be used as a reference instead of the reference pulse to control the timing of data acquisition by each sensor. Still, in order to correctly detect the position of a banknote BN, the above reference pulse is more advantageously used as the time reference.

The optical line sensor 12 may be configured to take an infrared transmission image of a banknote BN (image by infrared light applied to a banknote BN and passed through the banknote BN) with a pixel pitch of 0.5 mm in each of the main scanning direction and the sub-scanning direction, for example.

The thickness detection sensor 11 may measure the thickness of a banknote BN in each channel with a pitch of 10 mm or smaller in the main scanning direction and a pitch of 0.25 mm or 0.5 mm in the sub-scanning direction, for example. The thickness of the banknote BN may be measured within the range of 0 to 1023 µm at a resolution of 1 µm.

As illustrated in Fig. 6, the transport path 31 is provided with transport guides 35 that control the position of a banknote BN on both sides in the direction perpendicular to the transport direction. A banknote BN is transported in the direction indicated by an arrow between the transport guides 35. The thickness detection sensor 11, the optical line sensor 12, and the magnetic line sensor 14 are disposed over the entire region between the transport guides 35. Thereby, the thickness detection sensor 11 can measure the thickness of the entire surface of a banknote BN, the optical line sensor 12 can acquire an image of the entire surface of a banknote BN, and the magnetic line sensor 14 can acquire the magnetic properties of the entire surface of a banknote BN.

The thickness detection sensor 11, the optical line sensor 12, the fluorescent sensor 13, and the magnetic line sensor 14 are arranged at predetermined intervals in the transport direction of banknotes BN (left-right direction on the surface of the paper indicated in Fig. 5 and Fig. 6). A banknote BN may be transported on the transport path 31 from right to left on the surface of the paper of Fig. 5 and Fig. 6 (hereinafter, also referred to as normal transport) and may be transported from left to right on the surface of the paper of Fig. 5 and Fig. 6 (hereinafter, also referred to as reverse transport). A banknote BN is under normal transport in deposit processing and is under reverse transport in withdrawal processing. In either case, a banknote BN transported on the transport path 31 passes between the upper unit and lower unit of the banknote recognition device 2.

The banknote recognition device 2 includes the mechanical banknote detection sensors 51 serving as the tracking sensors 5, and pinch rollers 36. The mechanical banknote detection sensors 51 are arranged at the positions opposite to the optical line sensor 12 across the magnetic line sensor 14. The pinch rollers 36 are arranged at substantially the same position as the fluorescent sensor 13 between the optical line sensor 12 and the magnetic line sensor 14. Multiple (e.g., four, in the example illustrated in the figure) mechanical banknote detection sensors 51 and pinch rollers 36 are arranged at the respective positions at certain intervals in the direction perpendicular to the transport direction.

In the case of normal transport, imaging of a banknote BN by the optical line sensor 12, measurement of the fluorescent properties by the fluorescent sensor 13, and measurement of the magnetic properties by the magnetic line sensor 14 are performed based on the timing when the thickness detection sensor 11 placed upstream in the transport direction detects the front edge of the banknote BN. Accordingly, the thickness detection sensor 11 also functions as a tracking sensor (timing sensor). The results of detecting a banknote BN by a mechanical banknote detection sensor 51 placed downstream in the transport direction are used to allow the banknote handling device 1 to reverse a banknote BN or to send the banknote BN to a predetermined storage cassette 41 on the downstream side of the transport path 31, for example.

In contrast, in the case of reverse transport, measurement of the magnetic properties by the magnetic line sensor 14, measurement of the fluorescent properties by the fluorescent sensor 13, imaging of a banknote BN by the optical line sensor 12, and measurement of the thickness by the thickness detection sensor 11 are performed based on the timing when a mechanical banknote detection sensor 51 placed upstream in the transport direction detects the front edge of the banknote BN. The results of detecting a banknote BN by the thickness detection sensor 11 placed downstream in the transport direction are used to allow the banknote handling device 1 to send a banknote BN to the temporary storage 9 as a rejected note on the downstream side of the transport path 31, for example.

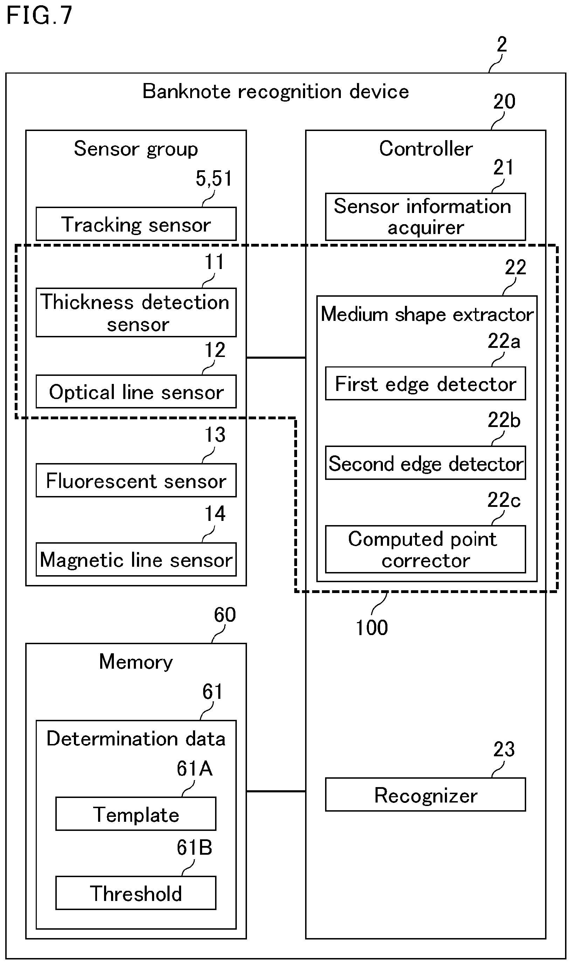

As illustrated in Fig. 7, the banknote recognition device 2 includes a sensor group including the tracking sensors 5 (mechanical banknote detection sensors 51), the thickness detection sensor 11, the optical line sensor 12, the fluorescent sensor 13, and the magnetic line sensor 14 as illustrated in Fig. 5 and Fig. 6, a controller 20 connected with each sensor of the sensor group, and a memory 60 connected with the controller 20.

The controller 20 composed of a logical device such as a field programmable gate array (FPGA) includes a sensor information acquirer 21, a medium shape extractor 22, and a recognizer 23. The sensor information acquirer 21 has a function of acquiring data relating to a banknote BN from the sensors constituting the sensor group.

The medium shape extractor 22 includes a first edge detector 22a, a second edge detector 22b, and a computed point corrector 22c, and extracts the shape (external shape, outline) of a banknote BN from the image data of the banknote BN acquired by the optical line sensor 12. The banknote image acquisition device 100 includes the thickness detection sensors 11, the optical line sensor 12, and the medium shape extractor 22. The specifications of the first edge detector 22a, the second edge detector 22b, and the computed point corrector 22c are described later.

The recognizer 23 utilizes the data acquired by the sensor information acquirer 21 to execute recognition processing. The recognizer 23 recognizes at least the denomination and authenticity of a banknote BN.

The recognizer 23 may have a function of determining the fitness of a banknote BN. In this case, the recognizer 23 has a function of detecting defects such as soil, fold, and tear of a banknote BN and detecting material such as tape attached to a banknote BN based on the thickness of the banknote BN, and thereby determining whether the banknote BN is processed as a fit note to be reused in the market or as an unfit note unsuitable to circulation in the market.

When the recognizer 23 uses an image of a banknote BN taken by the optical line sensor 12 for recognition of the information such as the denomination, the authenticity, and the fitness, it utilizes the outline information of the banknote BN acquired by the medium shape extractor 22. For example, based on the outline information of a banknote BN acquired by the medium shape extractor 22, the recognizer 23 defines a region corresponding to the banknote BN as a recognition target area within the whole image including the banknote BN and the background thereof, divides the image data within the area into blocks, and executes recognition processing by, for example, pattern matching.

The memory 60 is a memory device including, for example, a semiconductor memory or a hard disk, and stores therein determination data 61 for recognition of the information such as the denomination, the authenticity, and the fitness. The determination data 61 includes a variety of templates 61A and a variety of thresholds 61B. Examples of the templates 61A stored include a reference image for comparison with an image of a banknote BN taken by the optical line sensor 12 so as to recognize the information such as the denomination, the authenticity, and the fitness, and a reference waveform and a reference image for comparison with a waveform or an image indicating the fluorescent properties or the magnetic properties acquired from a banknote BN. Examples of the thresholds 61B stored include values for determining a variety of characteristic amounts acquired from a banknote BN so as to recognize the information such as the denomination, the authenticity, and the fitness of the banknote BN or to extract the shape of the banknote BN. Predetermined templates 61A and predetermined thresholds 61B are prepared in advance for the respective denominations of the banknotes BN to be handled by the banknote recognition device 2. The memory 60 also stores setting data of the methods for measuring a variety of data for recognition of a banknote BN. The memory 60 is also used to store the image data and the measured values detected by the sensors and the results of recognizing a banknote BN.

The processing of recognizing the denomination and authenticity of a banknote BN and the processing of determining the fitness based on defects such as soil, fold, and tear of a banknote BN can be executed by common techniques, and the specifications thereof are not described herein. In the following, extraction of the shape of a banknote BN achieved as a function of the banknote image acquisition device 100 is described in detail.

When the shape (external shape, outline) of a banknote BN having a transparent portion is extracted from the image data of the banknote BN collected by the optical line sensor 12, the presence of a transparent portion may prevent correct detection of the outline information of the banknote BN, as described above. In contrast, the thickness detection sensor 11 detects the thickness of a banknote BN, and thus can surely detect the presence or absence of a banknote BN even having a transparent portion. Accordingly, the outline information of a banknote BN acquired from the thickness data of the banknote BN correctly reflects the actual shape of the banknote BN. The banknote image acquisition device 100 of the present embodiment therefore corrects the outline information (information relating to the shape) of a banknote BN derived from the image data (optical image data) of the banknote BN collected by the optical line sensor 12 based on the outline information (information relating to the shape) of the banknote BN derived from the thickness data of the banknote BN collected by the thickness detection sensor 11 (correction step). Thereby, even if the outline information derived from the image data is incorrect, it can be corrected based on the correct outline information derived from the thickness data, resulting in an enhanced precision of extracting the shape of a banknote BN having a transparent portion. For example, in the example illustrated in Figs. 15(a) to 15(c), the edge computed points (black dots in Fig. 15(b)) inside the actual edges of the banknote are determined as inappropriate points based on the outline information derived from the thickness data, and are therefore removed. In the following, a method for extracting the shape of a banknote BN using the banknote image acquisition device 100, particularly the medium shape extractor 22 is described in detail.

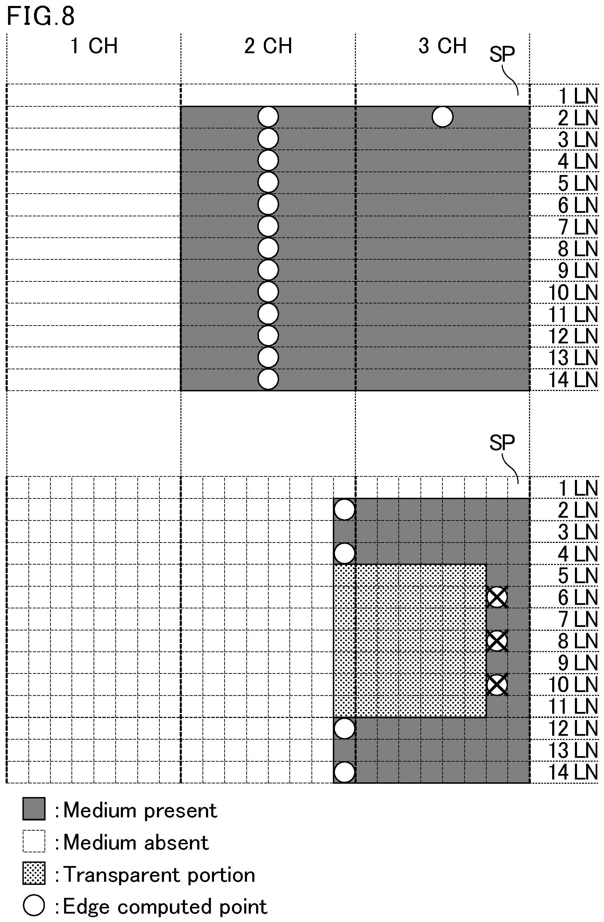

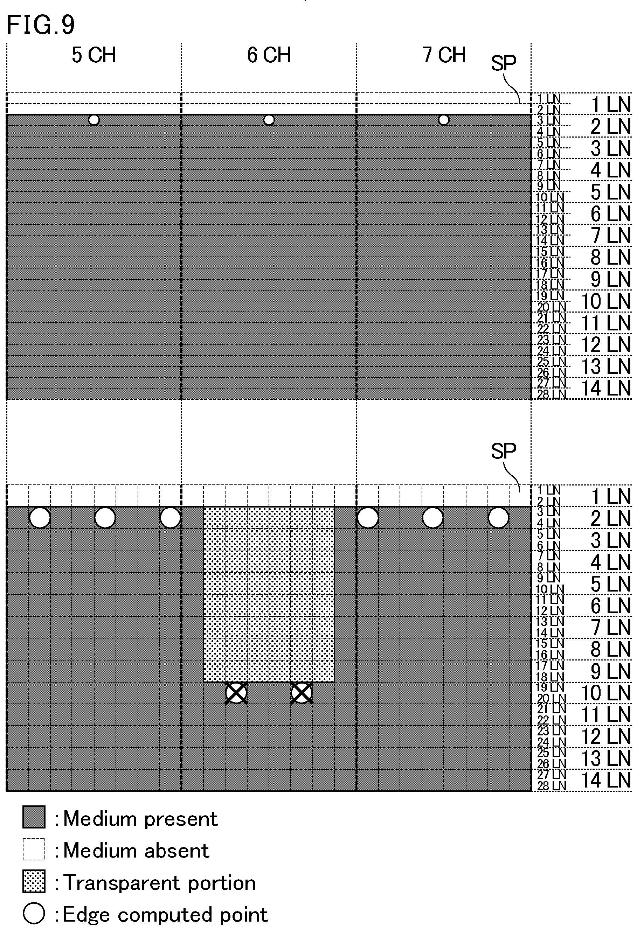

The first edge detector 22a of the medium shape extractor 22 is configured to detect the position of an edge of a banknote BN from the thickness data by the thickness detection sensor 11 (first edge detection step). Specifically, as illustrated in the upper figure of Fig. 8 and the upper figure of Fig. 9, the first edge detector 22a first compares the value (output value of the thickness detection sensor 11) of each channel with a predetermined threshold 61B for each line and determines the presence or absence of a banknote BN at each collecting position SP of the thickness data by the thickness detection sensor 11, thereby forming image data indicating the presence or absence of a banknote (medium) BN (hereinafter, the image of this image data is also referred to as a thickness detection sensor image). In other words, the first edge detector 22a binarizes the image derived from the thickness data with the predetermined threshold 61B. In the figures, LN means the line and CH means the channel. The collecting positions SP correspond to the pixels of the thickness detection sensor image by the thickness detection sensor 11 and of the image by the optical line sensor 12.

The first edge detector 22a then extracts, as edge computed points corresponding to any edge of the banknote BN, the extreme collecting positions SP in each of the main scanning direction and the sub-scanning direction among the collecting positions SP where the banknote BN is determined to be present. In other words, in the main scanning direction, the collecting positions SP (channels) where the medium is determined to be present are extracted as the edge computed points at the respective edges (left and right edges) for each line (see the upper figure of Fig. 8), while in the sub-scanning direction, the collecting positions SP (lines) where the medium is determined to be present are extracted as the edge computed points at the respective edges (front and back edges) for each channel (see the upper figure of Fig. 9).

As illustrated in the lower figure of Fig. 8 and the lower figure of Fig. 9, the second edge detector 22b of the medium shape extractor 22 is configured to detect, as multiple edge computed points, multiple collecting positions SP corresponding to an edge of a banknote BN from the image data by the optical line sensor 12 (second edge detection step). Hereinafter, the group of these edge computed points is also referred to as a pre-correction edge computed point group. Specifically, similar to the first edge detector 22a, the second edge detector 22b first compares the value (average of the values of consecutive pixels of each one-dimensional image sensor) of each channel with a predetermined threshold 61B for each line and determines the presence or absence of a banknote BN at each collecting position SP of the image data by the optical line sensor 12, thereby forming image data indicating the presence or absence of a banknote (medium) BN (hereinafter, the image of this image data is also referred to as an edge detection optical image). In other words, the second edge detector 22b binarizes the image derived from the image data by the optical line sensor 12 with the predetermined threshold 61B.

The second edge detector 22b then extracts, as edge computed points corresponding to any edge of the banknote BN, the extreme collecting positions SP in each of the main scanning direction and the sub-scanning direction among the collecting positions SP where the banknote BN is determined to be present. In other words, in the main scanning direction, the collecting positions SP (channels) where the medium is determined to be present are extracted as the edge computed points at the respective edges (left and right edges) for predetermined lines (see the lower figure of Fig. 8), while in the sub-scanning direction, the collecting positions SP (lines) where the medium is determined to be present are extracted as the edge computed points at the respective edges (front and back edges) for predetermined pixel columns (channels) of the edge detection optical image (see the lower figure of Fig. 9). The second edge detector 22b may extract 16 edge computed points at each of the upper and lower edges in the longitudinal direction of a banknote BN and 8 edge computed points at each of the left and right edges in the lateral direction of a banknote BN.

A variety of images (optical images) by the optical line sensor 12 each include not only a banknote BN but also the background thereof. The type of the image data referred by the second edge detector 22b is preferably, but not limited to, one relating to an infrared transmission image (image generated by infrared light applied to and passed through a banknote BN).

The channels (driven rollers 11a) of the thickness detection sensor 11 are arranged at a pitch greater than the pixel pitch of each one-dimensional image sensor, and the resolution in the main scanning direction of the thickness detection sensor 11 is lower than the resolution in the main scanning direction of the optical line sensor 12. Thus, as illustrated in Fig. 8 and Fig. 9, the resolution of the thickness data (thickness detection sensor image) is lower than the resolution of the image data (optical image) in the main scanning direction.

The resolution and the pixel pitch of the image data (optical image) by the optical line sensor 12 may be the same as the resolution and the pixel pitch of each one-dimensional image sensor in the main scanning direction. Still, in order to shorten the times of processing of recognizing the information such as the denomination and processing of extracting the external shape, for example, the output values (pixel values) of the pixels of each one-dimensional image sensor are subjected to processing (averaging processing) of averaging the values of multiple consecutive pixels by the sensor information acquirer 21 as described above, and the resolution and the pixel pitch of the image data (optical image) are lower than the resolution and the pixel pitch of each one-dimensional image sensor in the main scanning direction. The calculated averages are stored in the respective memory areas corresponding to the channels by the sensor information acquirer 21. In this case, each collecting position SP of the image data by the optical line sensor 12 corresponds to the position of the averaged pixel group, i.e., the position of the channel, of the one-dimensional image sensor in the main scanning direction. Even image data not having a high resolution enables the processing of recognizing the information such as the denomination and the processing of extracting the external shape.

In contrast, the resolutions in the sub-scanning direction of the thickness detection sensor 11 and the optical line sensor 12, i.e., the time intervals of data acquisition are set to the same value. As illustrated in Fig. 8 and Fig. 9, the resolution of the thickness data (thickness detection sensor image) is identical with the resolution of the image data (optical image) in the sub-scanning direction.

In the sub-scanning direction, the output of each imaging (exposure of pixel) by the optical line sensor 12 may not be averaged and constitute one pixel value of the image data (optical image) as it is, or the outputs of multiple consecutive imaging operations (exposure operations of pixel) by the optical line sensor 12 may be averaged for each pixel or channel by the sensor information acquirer 21 to constitute one pixel value of the image data (optical image). These embodiments may be switched by parameter settings.

In the present embodiment, the positions of arranging the channels of the thickness detection sensor 11 correspond to the positions of arranging the pixels of the optical line sensor 12. As illustrated in Fig. 8 and Fig. 9, a plurality of consecutive collecting positions SP of the optical line sensor 12 corresponds to one collecting position SP of the thickness detection sensor 11 in the main scanning direction (the left-right direction on the surface of the paper in Fig. 8 and Fig. 9). For example, the 1st to 8th collecting positions SP (channels), the 9th to 16th collecting positions SP (channels), and the 17th to 24th collecting positions SP (channels) from the left edge of the optical line sensor 12 correspond to the 1st collecting position SP (1st channel), the 2nd collecting position SP (2nd channel), and the 3rd collecting position SP (3rd channel) from the left edge of the thickness detection sensor 11.

As illustrated in the lower figure of Fig. 8 and the lower figure of Fig. 9, a transparent portion of a banknote BN extending to an edge of the banknote BN may prevent the second edge detector 22b from detecting this edge portion of the transparent portion in the optical image and may cause the second edge detector 22b to detect collecting positions SP inside from the actual edge of the banknote BN as edge computed points (in the figures, those marked with "×").

Then, in the present embodiment, the computed point corrector 22c of the medium shape extractor 22 performs correction to cancel such inappropriate edge computed points (computed point correction step). Specifically, the computed point corrector 22c determines whether or not each edge computed point by the second edge detector 22b corresponds to the position of an edge of a banknote BN detected by the first edge detector 22a. In other words, the computed point corrector 22c determines whether or not the position of each edge computed point by the second edge detector 22b corresponds to the position of an edge computed point by the first edge detector 22a. Then, the computed point corrector 22c removes noncorresponding edge computed points from the pre-correction edge computed point group. Hereinafter, the group of these post-correction edge computed points (edge computed points excluding inappropriate edge computed points) is also referred to as a post-correction edge computed point group.

For example, in the example illustrated in Fig. 8, the edge computed points on the 6th, 8th, and 10th lines by the second edge detector 22b correspond to the third collecting positions SP (3rd channel) from the left edge of the thickness detection sensor 11. In contrast, the edge computed points on the same lines by the first edge detector 22a are present at the second collecting positions SP (2nd channel) from the left edge of the thickness detection sensor 11. Thus, the positions of the edge computed points on the 6th, 8th, and 10th lines by the second edge detector 22b do not correspond to the positions of the edge computed points on the same lines by the first edge detector 22a.

In the example illustrated in Fig. 9, two collecting positions SP on the 10th line are detected as edge computed points by the second edge detector 22b among the collecting positions SP of the optical line sensor 12 corresponding to the 6th collecting position SP (6th channel) from the left edge of the thickness detection sensor 11. Still, the collecting position SP on the 2nd line is detected as the edge computed point by the first edge detector 22a among the 6th collecting positions SP (6th channel) from the left edge of the thickness detection sensor 11. Thus, the positions of the edge computed points on the 10th line by the second edge detector 22b do not correspond to the position of the edge computed point on the corresponding channel by the first edge detector 22a.

The medium shape extractor 22 specifies a region (partial image region) corresponding to a banknote BN from the whole image of the banknote BN and the background thereof based on this post-correction edge computed point group, and then extracts the shape (external shape, outline) of the region. For example, in the example illustrated in Figs. 15(a) to 15(c), the medium region 1000 including the transparent regions 1001 and 1002 are computed as a banknote based only on the appropriate edge computed points (round dots in Fig. 15(b)). Any method may be used to extract the shape of the partial image region from the post-correction edge computed point group, and an example thereof may be Hough transform. This is a technique of computing the straight lines passing the edge computed points (limited to those included in the post-correction edge computed point group) of the respective sides of a banknote BN and determining the four apexes corresponding to the four corners of the banknote BN.

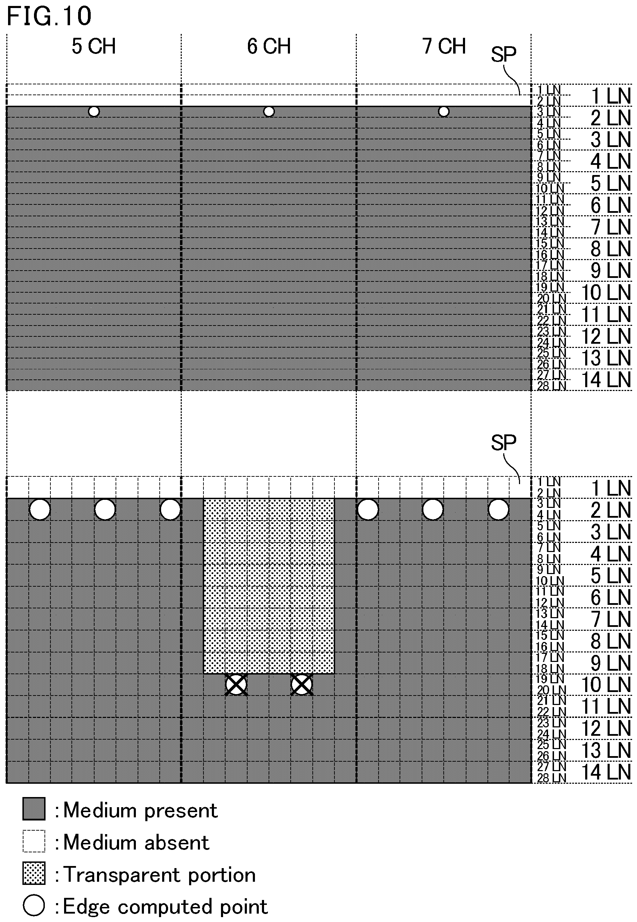

In the present embodiment, the resolution in the sub-scanning direction of the thickness detection sensor 11 may be higher than the resolution in the sub-scanning direction of the optical line sensor 12. As illustrated in Fig. 10, the resolution of the thickness data (thickness detection sensor image) may be higher, for example, twice higher, than the resolution of the image data (optical image) in the sub-scanning direction. In the example illustrated in Fig. 10, collecting positions SP of two adjacent lines by the thickness detection sensor 11 correspond to one collecting position SP by the optical line sensor 12.

As described above, in the above embodiment, the outline information of a banknote BN derived from the image data of the entire surface of the banknote BN collected by the optical line sensor 12 is corrected based on the outline information of the banknote BN derived from the thickness data of the banknote BN collected by the thickness detection sensor 11 (the correction step is included). Thus, even if the outline information of the banknote BN derived from the image data is incorrect due to a transparent portion of the banknote BN, it can be corrected by the correct outline information of the banknote BN derived from the thickness data. This enables highly precise extraction of the shape of the banknote BN having a transparent portion from the image data acquired by the optical line sensor 12.

In the above embodiment, the device and the method can highly precisely extract the shape of a banknote BN having a transparent portion. Thus, the device can highly precisely calculate the size of a banknote BN such as the length of a banknote and the parameters relating to the state of the banknote BN under transport such as the skewing angle. This can reduce a decrease in passage of banknotes BN due to rejection and can reduce the chance of miscalculation due to misrecognition.

In the above embodiment, the device (method) further includes the first edge detector 22a configured to detect the position of an edge of a banknote BN from the thickness data (first edge detection step), the second edge detector 22b configured to detect collecting positions corresponding to an edge of the banknote BN from the image data, with the collecting positions being determined as edge computed points (second edge detection step), and the computed point corrector 22c configured to remove an edge computed point that does not correspond to the position of the edge detected by the first edge detector from the edge computed points (computed point correction step). This enables more highly precise extraction of the shape of a banknote BN having a transparent portion from the image data acquired by the optical line sensor 12.

In the above embodiment, the resolution in the main scanning direction of the thickness data is lower than the resolution in the main scanning direction of the image data. This easily enables a banknote image acquisition device 100 including the thickness detection sensor 11.

In the above embodiment, the resolution in the sub-scanning direction of the thickness data is equal to the resolution in the sub-scanning direction of the image data or is higher than the resolution in the sub-scanning direction of the image data, which provides more specific outline information of a banknote BN derived from the thickness data in the sub-scanning direction. This therefore enables more correct extraction of the outline shapes of both edges (front and back edges) of a banknote BN in the transport direction.

In the above embodiment, the thickness detection sensor 11 is placed upstream of the optical line sensor 12 in the transport direction of banknotes BN in normal transport. In this case, acquisition of the thickness data of a banknote BN by the thickness detection sensor 11 and processing based on the thickness data (e.g., processing by the first edge detector 22a) can be performed before acquisition of the image data of a banknote BN by the optical line sensor 12 and processing based on the image data (e.g., processing by the second edge detector 22b), and these processes can be performed in real time. This can therefore shorten the processing time for extracting the external shape of a banknote BN.

In the above embodiment, the thickness detection sensor 11 is placed downstream of the optical line sensor 12 in the transport direction of banknotes BN in reverse transport. This enables highly precise extraction of the external shape of a banknote BN even in reverse transport although the processing time for extracting the external shape of a banknote BN cannot be shortened as in the case of normal transport.

In the above embodiment, the thickness detection sensor 11 collects thickness data of the entire surface of a banknote BN, which enables execution of the aforementioned correction processing regardless of the type of a banknote BN and the position of a transparent portion. This therefore enables highly precise extraction of the shape of a banknote BN even having an unknown transparent portion.

### (Modified Embodiment)

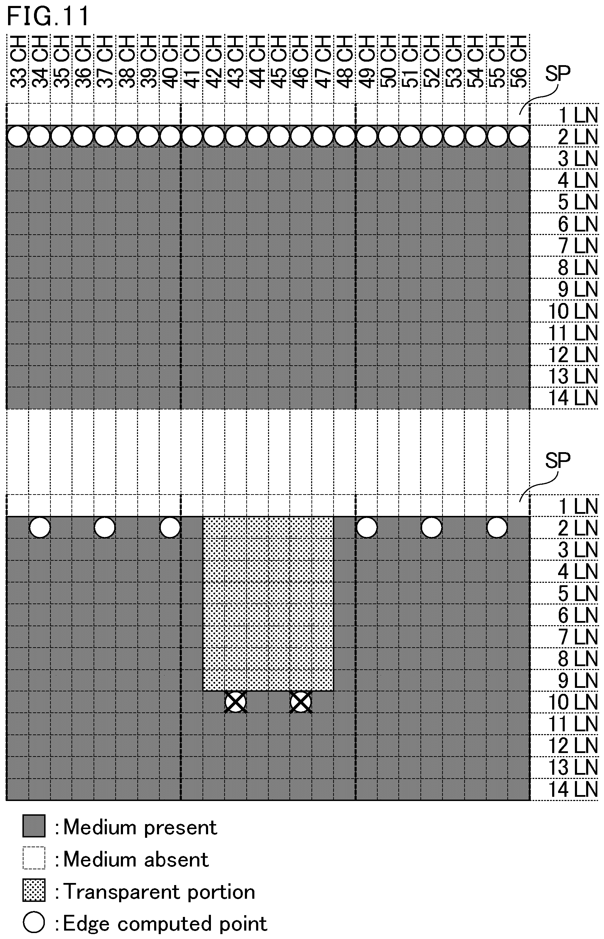

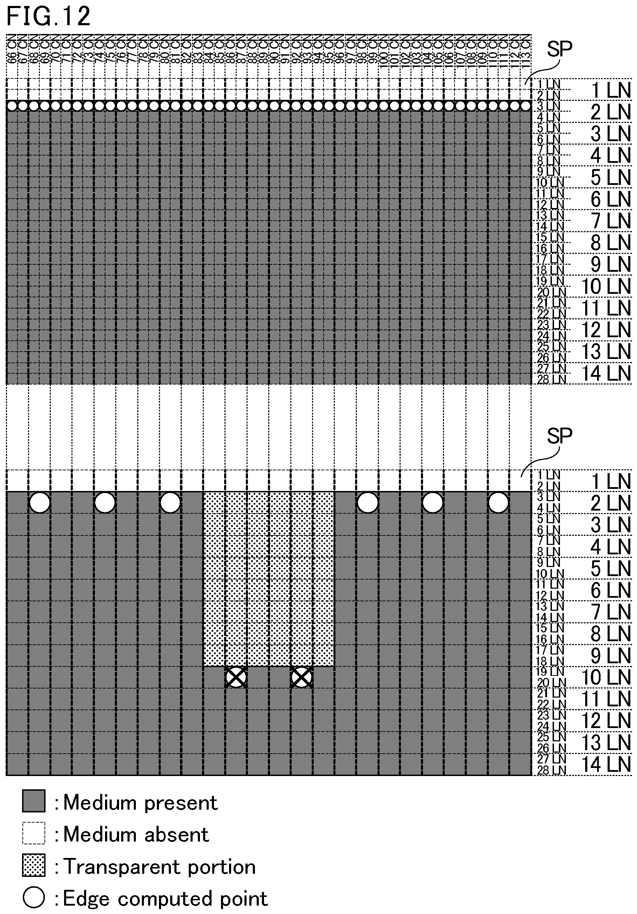

In the above embodiment, the resolution in the main scanning direction of the thickness data is lower than the resolution in the main scanning direction of the image data. Still, as illustrated in Fig. 11, the resolution in the main scanning direction of the thickness data may be equal to the resolution in the main scanning direction of the image data, or as illustrated in Fig. 12, the resolution in the main scanning direction of the thickness data may be higher than the resolution in the main scanning direction of the image data. In this embodiment, the device and the method can provide more specific outline information of a banknote BN derived from the thickness data in the main scanning direction. This therefore enables more correct extraction of the outline shapes of both edges (left and right edges) of a banknote BN at left and right relative to the transport direction.

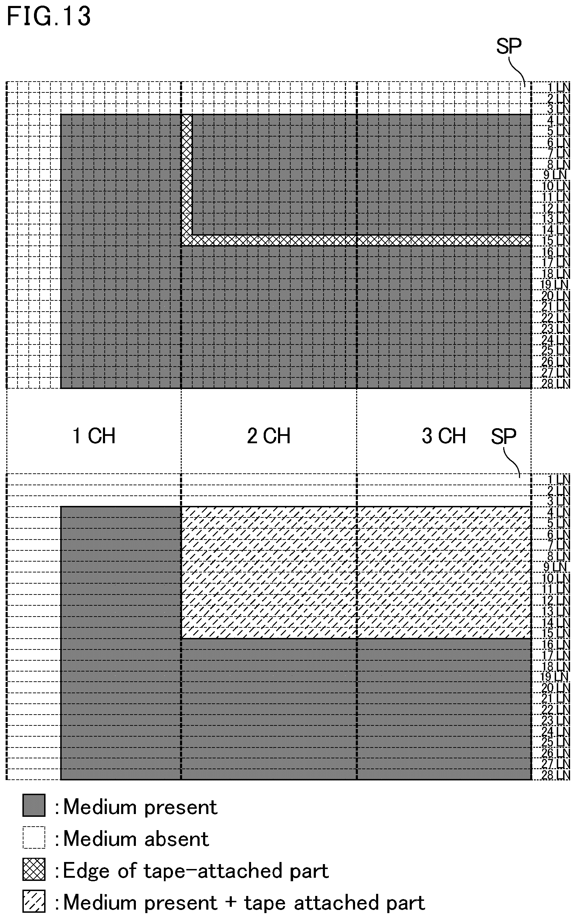

In the above embodiment, the image data having a higher resolution in the main scanning direction is corrected based on the thickness data having a lower resolution in the main scanning direction. Still, as illustrated in Fig. 13, the thickness data having a lower resolution in the main scanning direction (the lower figure of Fig. 13) may be corrected based on the image data having a higher resolution in the main scanning direction (the upper figure of Fig. 13). Thereby, when tape is partly attached to a banknote, for example, an edge of the tape-attached part may be extracted from the image data and this extraction results may be used to determine whether the tape detection results derived from the thickness data is reasonable or not.

In the above embodiment, the thickness detection sensor 11 collects the thickness data of the entire surface of a banknote BN. When the position of a transparent portion of a banknote BN that is an image acquisition target is known, for example, the thickness detection sensor 11 may collect the thickness data of only a part of the banknote BN corresponding to the transparent portion (e.g., both edges (left and right edges) of the banknote BN at left and right relative to the transport direction). This enables highly precise extraction of the shape of a banknote BN having a known transparent portion.

In the above embodiment, the tracking sensors 5 used are the mechanical banknote detection sensors 51. Still, the tracking sensors 5 may be common optical banknote detection sensors.

Hereinabove, some embodiments of the present invention are described with reference to the drawings. Still, the present invention is not intended to be limited by the above embodiments. The structures of the embodiments may be appropriately combined with each other or modified as long as they fall within the scope of the appended claims.

### INDUSTRIAL APPLICABILITY

As described above, the present invention provides a technique useful for extracting the shape of a sheet from an image of the sheet and the background thereof.

### REFERENCE SIGNS LIST

1: banknote handling device (sheet handling device)
2: banknote recognition device (sheet recognition device)
3: transporter
4: storage
5: tracking sensor (timing sensor)
6: controller
7: depositor
8: withdrawer
9: temporary storage
11: thickness detection sensor
11a: driven roller
11b: driving roller
12: optical line sensor
13: fluorescent sensor
14: magnetic line sensor
14a: magnetic line sensor unit
14b: hair roller
20: controller
21: sensor information acquirer
22: medium shape extractor
22a: first edge detector
22b: second edge detector
22c: computed point corrector
23: recognizer
31: transport path
32: connection path (transport path)
33, 34: diverter
35: transport guide
36: pinch roller
41₋₁ to 41_s: first to fifth storage cassette
41_{-4U}: fourth storage cassette upper part
41_{-4L}: fourth storage cassette lower part
51: mechanical banknote detection sensor (pinch roller unit)
511: driving roller (rotor)
512: driven roller (rotor)
513: roller supporter
514: sensor body
515: pivot shaft
516: compression spring
517: magnet
518: Hall effect device
519: detector
60: memory
61: determination data
61A: template
61B: threshold
100: banknote image acquisition device (sheet image acquisition device) BN, BN1: banknote (sheet)
CH: channel
LN: line
SP: data collecting position (pixel of image)
W1, W2: transparent portion

## Claims

1. A sheet image acquisition device configured to acquire an image of a sheet having a transparent portion (W1, W2), comprising
a thickness detection sensor configured to collect thickness data of the sheet; and
an optical line sensor configured to collect image data of an entire surface of the sheet,
**characterized in that** the sheet image acquisition device is configured to correct outline information of the sheet derived from the image data of an entire surface of the sheet collected by the optical line sensor based on outline information of the sheet derived from the thickness data for improving a precision of extracting the shape of the sheet.

2. The sheet image acquisition device according to claim 1,
wherein the thickness detection sensor is configured to collect the thickness data at collecting positions in each of a main scanning direction and a sub-scanning direction,
the optical line sensor is configured to collect the image data at the collecting positions in each of the main scanning direction and the sub-scanning direction,
the sheet image acquisition device further comprises:
a transporter configured to transport the sheet,
a first edge detector(22a) configured to detect a position of an edge of the sheet from the thickness data;
a second edge detector (22b) configured to detect the collecting positions corresponding to the edge of the sheet from the image data, with the collecting positions being determined as edge computed points; and
a computed point corrector (22c) configured to remove an edge computed point that does not correspond to the position of the edge detected by the first edge detector (22a) from the edge computed points.

3. The sheet image acquisition device according to claim 2,
wherein the edge computed point that does not correspond to the position of the edge detected by the first edge detector is an edge computed point that is inside actual edges of the sheet.

4. The sheet image acquisition device according to claim 2 or 3,
wherein a controller (20) comprises the first edge detector (22a), the second edge detector (22b), the computed point corrector (22b), a sensor information acquirer (21) and a recognizer (23).

5. The sheet image acquisition device according to any one of claims 1 to 4,
wherein a resolution in a main scanning direction of the thickness data is lower than a resolution in the main scanning direction of the image data.

6. The sheet image acquisition device according to any one of claims 1 to 5,
wherein a resolution in a sub-scanning direction of the thickness data is equal to a resolution in the sub-scanning direction of the image data or is higher than the resolution in the sub-scanning direction of the image data.

7. The sheet image acquisition device according to any one of claims 1 to 6,
wherein the thickness detection sensor is placed upstream from the optical line sensor in a transport direction of the sheet.

8. The sheet image acquisition device according to any one of claims 1 to 6,
wherein the thickness detection sensor is placed downstream from the optical line sensor in a transport direction of the sheet.

9. The sheet image acquisition device according to any one of claims 1 to 8,
wherein the thickness detection sensor is configured to collect thickness data of the entire surface of the sheet as the thickness data.

10. A sheet handling device comprising the sheet image acquisition device according to any one of claims 1 to 9.

11. A sheet image acquisition method of acquiring an image of a sheet having a transparent portion (W1, W2), the method comprising:
correcting outline information of the sheet derived from image data of an entire surface of the sheet collected by an optical line sensor based on outline information of the sheet derived from thickness data of the sheet collected by a thickness detection sensor for improving a precision of extracting the shape of the sheet.

## Patentansprüche

1. Einrichtung zur Erfassung eines Bildes eines Blattes, die konfiguriert ist, um ein Bild von einem Blatt zu erfassen, das einen durchsichtigen Abschnitt (W1, W2) hat, die aufweist:
einen Dickenerfassungssensor, der konfiguriert ist, um Daten von der Dicke von dem Blatt zu sammeln; und
einen optischen Liniensensor, der konfiguriert ist, um Bilddaten von einer gesamten Oberfläche von dem Blatt zu sammeln,
**dadurch gekennzeichnet dass** die Einrichtung zur Erfassung eines Bildes eines Blattes konfiguriert ist, um Umrissinformationen von dem Blatt zu korrigieren, die von den Bilddaten von einer gesamten Oberfläche von dem Blatt erhalten worden sind, die durch den optischen Liniensensor basierend auf Umrissinformationen von dem Blatt gesammelt worden sind, die von den Daten über die Dicke erhalten worden sind, um eine Genauigkeit von der Extrahierung der Form von dem Blatt zu verbessern.

2. Einrichtung zur Erfassung eines Bildes von einem Blatt gemäß Anspruch 1, wobei
der Dickenerfassungssensor konfiguriert ist, um die Daten über die Dicke an Sammelpositionen in jeder von einer Hauptabtastrichtung und einer Unterabtastrichtung zu sammeln,
der optische Liniensensor konfiguriert ist, um die Bilddaten an den Sammelpositionen von der Hauptabtastrichtung und der Unterabtastrichtung zu sammeln, wobei
die Einrichtung zur Erfassung eines Bildes von einem Blatt ferner aufweist:
einen Beförderer, der konfiguriert ist, um das Blatt zu befördern,
einen ersten Kantendetektor (22a), der konfiguriert ist, um eine Position von einer Kante von dem Blatt von den Daten über die Dicke zu erfassen;
einen zweiten Kantendetektor (22b), der konfiguriert ist, um die Sammelpositionen entsprechend zu der Kante von dem Blatt von den Bilddaten zu erfassen, wobei die Sammelpositionen als Kantenberechnungspunkte bestimmt werden; und
einen Berechnungspunktkorrektor (22c), der konfiguriert ist, um einen Kantenberechnungspunkt zu entnehmen, der nicht zu der Position der Kante korrespondiert, die durch den ersten Kantendetektor (22a) von den Kantenberechnungspunkten erfasst worden ist.

3. Einrichtung zum Erfassen eines Bildes von einem Blatt gemäß Anspruch 2,
wobei der Kantenberechnungspunkt, der nicht der Position von der Kante entspricht, die durch den ersten Kantendetektor erfasst worden ist, ein Kantenberechnungspunkt ist, der innerhalb von tatsächlichen Kanten von dem Blatt ist.

4. Einrichtung zur Erfassung eines Bildes von einem Blatt nach Anspruch 2 oder 3,
wobei eine Steuerung (20) den ersten Kantendetektor (22a), den zweiten Kantendetektor (22b), den Berechnungspunktkorrektor (22b), einen Sensorinformationsermittler (21) und eine Erkennungseinrichtung (23) aufweist.

5. Einrichtung zur Erfassung eines Bildes von einem Blatt nach irgendeinem der Ansprüche 1 bis 4,
wobei eine Auflösung in einer Hauptabtastrichtung von den Dickendaten niedriger als eine Auflösung in der Haupterkennungsrichtung von den Bilddaten ist.

6. Einrichtung zur Erfassung eines Bildes von einem Bild nach irgendeinem der Ansprüche 1 bis 5,
wobei eine Auflösung in einer Unterabtastrichtung von den Dickendaten gleich zu einer Auflösung der Unterabtastrichtung von den Bilddaten oder höher als die Auflösung in der Unterabtastrichtung von den Bilddaten ist.

7. Einrichtung zur Erfassung eines Bildes von einem Blatt nach irgendeinem der Ansprüche 1 bis 6,
wobei der Dickenerfassungssensor stromaufwärts von dem optischen Liniensensor in einer Beförderungsrichtung von dem Blatt angeordnet ist.

8. Einrichtung zur Erfassung eines Bildes von einem Blatt nach irgendeinem der Ansprüche 1 bis 6,
wobei der Dickenerfassungssensor stromabwärtig von dem optischen Liniensensor in einer Beförderungsrichtung von dem Blatt angeordnet ist.

9. Einrichtung zur Erfassung eines Bildes von einem Blatt nach irgendeinem der Ansprüche 1 bis 8,
wobei der Dickenerfassungssensor konfiguriert ist, um Dickendaten von der gesamten Oberfläche von dem Blatt als die Dickendaten zu sammeln.

10. Blatthandhabungseinrichtung, die die Einrichtung zur Erfassung eines Bildes von einem Blatt nach irgendeinem der Ansprüche 1 bis 9 aufweist.

11. Verfahren zur Erfassung eines Bildes von einem Blatt zum Erfassen eines Bildes von einem Blatt, das einen durchsichtigen Abschnitt (W1, W2) hat, wobei das Verfahren aufweist:
Umrissinformationen von dem Blatt werden korrigiert, die von den Bilddaten von einer gesamten Oberfläche von dem Blatt erhalten werden, die durch einen optischen Liniensensor basierend auf Umrissinformationen von dem Blatt gesammelt werden, die von den Dickendaten von dem Blatt, die durch einen Dickenerfassungssensor gesammelt worden sind, erhalten werden, um eine Genauigkeit der Extrahierung der Form von dem Blatt zu verbessern.

## Revendications

1. Dispositif d'acquisition d'image de feuille configuré pour acquérir une image d'une feuille ayant une partie transparente (W1, W2), comprenant
un capteur de détection d'épaisseur configuré pour collecter des données d'épaisseur de la feuille ; et
un capteur de ligne optique configuré pour collecter des données d'image d'une surface entière de la feuille,
**caractérisé en ce que** le dispositif d'acquisition d'image de feuille est configuré pour corriger des informations de contour de la feuille dérivées des données d'image d'une surface entière de la feuille collectées par le capteur de ligne optique sur la base d'informations de contour de la feuille dérivées des données d'épaisseur pour améliorer une précision d'extraction de la forme de la feuille.

2. Dispositif d'acquisition d'image de feuille selon la revendication 1,
dans lequel le capteur de détection d'épaisseur est configuré pour collecter les données d'épaisseur à des positions de collecte dans chacune d'une direction de balayage principal et d'une direction de sous-balayage,
le capteur de ligne optique est configuré pour collecter les données d'image aux positions de collecte dans chacune de la direction de balayage principal et de la direction de sous-balayage,
le dispositif d'acquisition d'image de feuille comprend en outre :
un transporteur configuré pour transporter la feuille,
un premier détecteur de bord (22a) configuré pour détecter une position d'un bord de la feuille à partir des données d'épaisseur ;
un deuxième détecteur de bord (22b) configuré pour détecter les positions de collecte correspondant au bord de la feuille à partir des données d'image, les positions de collecte étant déterminées en tant que points calculés de bord ; et
un correcteur de point calculé (22c) configuré pour supprimer un point calculé de bord qui ne correspond pas à la position du bord détecté par le premier détecteur de bord (22a) à partir des points calculés de bord.

3. Dispositif d'acquisition d'image de feuille selon la revendication 2,
dans lequel le point calculé de bord qui ne correspond pas à la position du bord détecté par le premier détecteur de bord est un point calculé de bord qui est à l'intérieur des bords réels de la feuille.

4. Dispositif d'acquisition d'image de feuille selon la revendication 2 ou 3,
dans lequel un contrôleur (20) comprend le premier détecteur de bord (22a), le deuxième détecteur de bord (22b), le correcteur de point calculé (22b), un capteur d'acquisition d'informations (21) et un reconnaisseur (23).

5. Dispositif d'acquisition d'image de feuille selon l'une quelconque des revendications 1 à 4,
dans lequel une résolution dans une direction de balayage principal des données d'épaisseur est inférieure à une résolution dans la direction de balayage principal des données d'image.

6. Dispositif d'acquisition d'image de feuille selon l'une quelconque des revendications 1 à 5,
dans lequel une résolution dans une direction de sous-balayage des données d'épaisseur est égale à une résolution dans la direction de sous-balayage des données d'image ou est supérieure à la résolution dans la direction de sous-balayage des données d'image.

7. Dispositif d'acquisition d'image de feuille selon l'une quelconque des revendications 1 à 6,
dans lequel le capteur de détection d'épaisseur est placé en amont du capteur de ligne optique dans une direction de transport de la feuille.

8. Dispositif d'acquisition d'image de feuille selon l'une quelconque des revendications 1 à 6,
dans lequel le capteur de détection d'épaisseur est placé en aval du capteur de ligne optique dans une direction de transport de la feuille.

9. Dispositif d'acquisition d'image de feuille selon l'une quelconque des revendications 1 à 8,
dans lequel le capteur de détection d'épaisseur est configuré pour collecter des données d'épaisseur de toute la surface de la feuille en tant que données d'épaisseur.

10. Dispositif de manipulation de feuille comprenant le dispositif d'acquisition d'image de feuille selon l'une quelconque des revendications 1 à 9.

11. Procédé d'acquisition d'image de feuille pour acquérir une image d'une feuille ayant une partie transparente (W1, W2), le procédé comprenant :
la correction d'informations de contour de la feuille dérivées de données d'image d'une surface entière de la feuille recueillies par un capteur de ligne optique sur la base d'informations de contour de la feuille dérivées de données d'épaisseur de la feuille collectées par un capteur de détection d'épaisseur pour améliorer une précision d'extraction de la forme de la feuille.
